# EUROPÄISCHE PATENTSCHRIFT

(11) **EP 1 022 113 B1**
(45) Veröffentlichungstag und Bekanntmachung des Hinweises auf die Patenterteilung: **19.03.2003**
(21) Anmeldenummer: 00100615.4
(22) Anmeldetag: 13.01.2000
(51) Int. Cl.: B29C 65/08, B29C 65/00, B23K 20/10

(54) **Vorschubeinheit für eine Schweissvorrichtung, insbesondere eine Ultraschall-Schweissvorrichtung**
Feeding unit for a welding apparatus, in particular for an ultrasonic welding apparatus
Unité d'alimentation pour un dispositif de soudage, en particulier pour un dispositif de soudage à ultrasons

(30) Priorität: 23.01.1999 DE 19902691
(43) Veröffentlichungstag der Anmeldung: 26.07.2000
(73) Patentinhaber: Sonotronic Nagel GmbH, 76307 Karlsbad (DE)
(72) Erfinder: Nagel, Dieter, 76307 Karlsbad (DE); Stierle, Siegfried, 75438 Knittlingen (DE)
(74) Vertreter: Leitner, Waldemar, Dr. techn.

(56) Entgegenhaltungen:
- EP-A- 0 417 395
- US-A- 2 815 535

## Beschreibung

Die Erfindung betrifft eine Vorschubeinheit für eine Schweißvorrichtung, insbesondere eine Ultraschall-Schweißvorrichtung, mit einem entlang einer Linearführung beweglichen, ein Schweißwerkzeug der Schweißvorrichtung tragenden Schlitten, und mit mindestens einem mit dem Schlitten verbundenen, hydraulisch oder pneumatisch betätigten, über gesteuerte Ventile mit Druck beaufschlagbaren Arbeitszylinder.

Ultraschall-Schweißen wird verbreitet zur Verarbeitung thermoplastischer Kunststoffe eingesetzt. Eine mit einem piezoelektrischen oder magnetostriktiven elektrisch- mechanischen Schwingungswandler ausgestattete Sonotrode des Schweißwerkzeugs der Ultraschall-Schweißvorrichtung setzt eine von einem Schwingungsgenerator erzeugte hochfrequente elektrische Schwingung in eine mechanische Schwingung um, die, an das zu bearbeitende Werkstück angepaßt, dieses unmittelbar vor einer beabsichtigten Verbindung oder Verformung plastifiziert. Beim Schweißvorgang wird der Druck auf das Werkstück nach einer von Größe und Form des Werkstückes sowie von der Art des eingesetzten Kunststoffs abhängigen Zeitfunktion gesteuert, wobei der Schwingungsgenerator zu vorgegebenen Zeitpunkten ein- oder ausgeschaltet wird. Zur Erzeugung des Schweißdruckes wird hierbei das mit dem Schlitten verbundene Schweißwerkzeug durch die Kraft des auf den Schlitten einwirkenden Arbeitszylinders gegen das Werkstück gedrückt.

Üblicherweise ist die gesamte elektrische Steuerung einschließlich der die Druckzuführung steuemden Ventile von der Vorschubeinheit getrennt angeordnet und über lange Schlauchleitungen mit dieser verbunden. Elektrische Signale, wie z. B. die Stellungen von Endlagekontakten, werden über Kabel an die Steuerung übertragen.

Die Druckversorgung des Arbeitszylinders über lange Schlauchleitungen hat jedoch Nachteile hinsichtlich der Konstanz des einzustellenden Drucks. Öffnungs - und Schließvorgänge an den von der Vorschubeinheit räumlich abgesetzten Ventilen führen - insbesondere bei pneumatisch zu betätigenden Arbeitszylindern - zu niederfrequenten Schwingungen im Drucksystem und damit zu Druckschwankungen, die sich in nachteiliger Art und Weise in abweichenden Zustellwegen der Schweißwerkzeuge und somit in Abweichungen der gefertigten Produkte von ihren Sollabmessungen bemerkbar machen.

Aus der EP-A-0 417 395 ist eine Vorschubeinrichtung für eine Ultraschall-Schweißvorrichtung bekannt, die einen entlang einer Linearführung beweglichen Schlitten aufweist. Auf dem Schlitten ist ein Schweißwerkzeug der Schweißvorrichtung angeordnet. Der Schlitten ist mit dem Arbeitszylinder verbunden, der über gesteuerte Ventile mit Druck beaufschlagbar ist.

Auch diese bekannte Vorrichtung besitzt den Nachteil, daß hierbei eine Druckversorgung des Arbeitszylinders über lange Schlauchleitungen gegeben ist, was wiederum Nachteile hinsichtlich der Konstanz des einzustellenden Drucks mit sich bringt.

Der Erfindung liegt deshalb die Aufgabe zugrunde, eine Vorschubeinheit der eingangs beschriebenen Art zu schaffen, bei der das Auftreten von nachteiligen Durckschwankungen minimiert oder zumindest reduziert ist.

Diese Aufgabe wird erfindungsgemäß dadurch gelöst, daß zur Einstellung des die Bewegung des Arbeitszylinders bewirkenden Druckes ein in der Nähe des Arbeitszylinders angeordnetes Proportionalventil vorgesehen ist, dessen Ausgang über eine kurze Druckleitung mit dem Eingang des Arbeitszylinders verbunden ist, daß das Proportionalventil in einem den Arbeitszylinder umschließenden Gehäuse angeordnet ist, und daß das Gehäuse Druckzuführungen ausweist, durch welche der Vorschubeinheit ein einen Kolben des Arbeitszylinders in Schubrichtung oder in Rückhubrichtung druckbeaufschlagendes Druckübertragungsmedium zuführbar ist.

Die erfindungsgemäßen Maßnahmen besitzen den Vorteil, daß die mit Druckänderungen beaufschlagte, vom Proportionalventil zum Arbeitszylinder führende, diesem das Druckmedium zuführende Druckleitung kurz ist, so daß im wesentlichen keine störenden Druckschwankungen mehr entstehen können. Der in der zum Ventil führenden Schlauchleitung eingestellte, von einer externen Druckerzeugungsvorrichtung generierte Primärdruck beeinflußt den Arbeitszylinder nicht mehr unmittelbar und ist üblicherweise während des Betriebes weitgehend konstant, so daß auch dort keine den Schweißvorgang störenden Druckschwankungen entstehen.

Eine vorteilhafte Weiterbildung der Erfindung sieht vor, daß das Proportionalventil sowie vorzugsweise ein Drucksensor und/oder ein die Position des Schlittens und damit die Position des Schweißwerkzeugs erfassender Weggeber in einem den Arbeitszylinder umschließenden Gehäuse untergebracht. Damit sind alle diese Einrichtungen gegen äußere Einflüsse und Beschädigungen geschützt und die interne Druckleitung zwischen Arbeitszylinder und Proportionalventil ist sehr kurz ausgeführt.

Eine weitere vorteilhafte Weiterbildung der Erfindung sieht vor, daß die elektrischen Zuleitungen zum Proportionalventil, zum Drucksensor und/oder zum Weggeber in einer am Gehäuse angebrachten Steckbuchse zusammengefaßt und über eine gemeinsame, mit einem entsprechenden Stecker ausgestattete Verbindung mit der elektrischen Steuerung verbunden sind.

Eine weitere vorteilhafte Weiterbildung der Vorschubeinheit nach der Erfindung sieht einen doppeltwirkenden, auch als Differentialzylinder bezeichneten Arbeitszylinder vor. Dieser hat gegenüber einem nur in Schubrichtung wirkenden Arbeitszylinder den Vorteil, auch den Rückhub durchführen zu können.

Eine weitere vorteilhafte Weiterbildung der Vorschubeinheit nach der Erfindung ist Gegenstand des Patentanspruchs 10 und betrifft die elektrische Steuerung, die hier vorzugsweise als speicherprogrammierbare Steuerung ausgebildet ist und Steuersignale für die Bewegungsabläufe vieler verschiedener Schweißvorgänge vorprogrammiert enthält.

Weitere vorteilhafte Weiterbildungen der Erfindung sind den Unteransprüchen zu entnehmen.

Anhand mehrerer Figuren soll im folgenden ein Ausführungsbeispiel der Vorschubeinrichtung nach der Erfindung eingehend beschrieben werden.
- Figuren 1a und 1b: Seitenansichten eines Ausführungsbeispiels einer Vorschubeinheit,
- Figur 2 a: eine Draufsicht auf eine Vorschubeinheit in Vorschubrichtung,

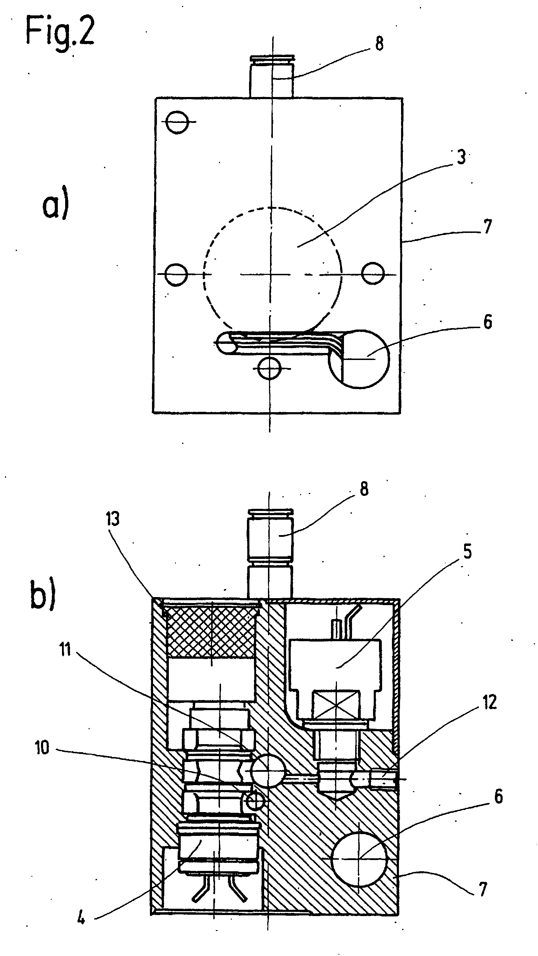

- Figur 2 b: ein Schnittbild senkrecht zur Vorschubrichtung auf Höhe des Proportionalventils.

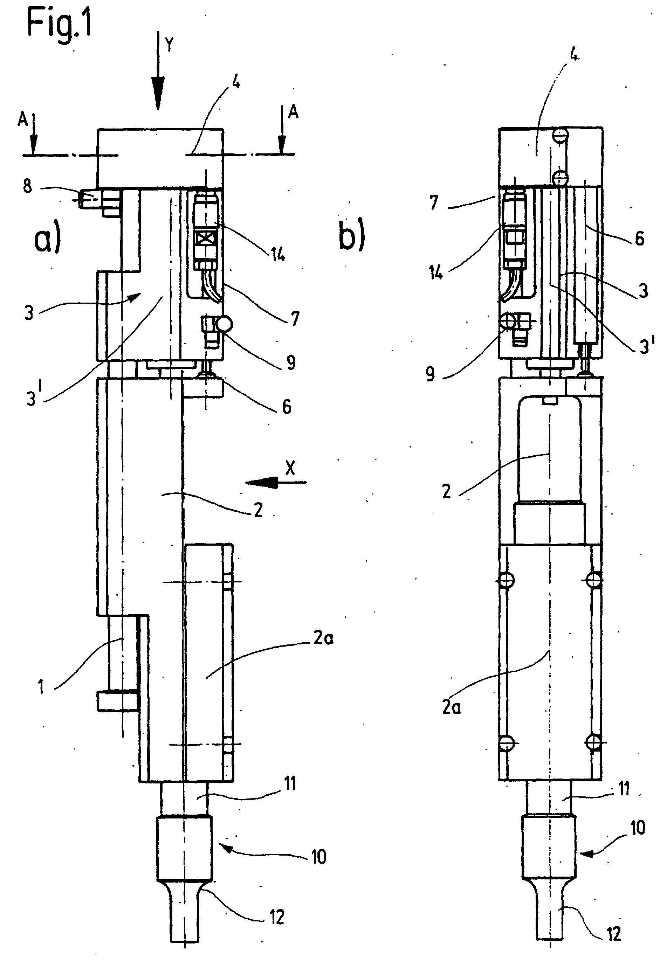

In den Figuren 1a und 1b ist schematisch und in Seitenansicht ein Ausführungsbeispiel einer Vorschubeinheit wiedergegeben. Mit 1 ist eine Linearführung bezeichnet, an der entlang ein Schlitten 2 gleitet, der ein Schweißwerkzeug 10 trägt, das in einem Konverterhalter 2a einen elektrisch-mechanischen Wandler 11 mit einer an diesem angekoppelten, entsprechend dem zu bearbeitenden Werkstück gestalteten Sonotrode 12 aufweist. Der Schlitten 2 ist mit einem vorzugsweise doppeltwirkenden, pneumatischen oder hydraulischen Arbeitszylinder 3 verbunden, dessen Kolben 3' entweder Schub oder Zug auf den Schlitten 2 ausübt. Über Druckzuführungen 8, 9, die je nach Druckübertragungsmedium, z.B. Preßluft oder Hydraulikflüssigkeit entsprechend ausgelegt sind, wird der Kolben 3' in Schubrichtung oder - nach Beendigung des Schweißvoganges - in Rückhubrichtung mit Druck beaufschlagt.

Die im allgemeinen zeitabhängige Einstellung des Schweißdruckes erfolgt bei der beschriebenen Vorschubeinheit über ein Proportionalventil 4, das unmittelbar oberhalb des Arbeitszylinders 3 in einer Erweiterung eines den Arbeitszylinder 3 umschließenden Gehäuses 7 angeordnet und mit seiner Druckausgangsseite mit der Schub erzeugenden Zylinderkammer des Arbeitszylinders 3 verbunden ist. Den weitgehend konstanten Eingangsdruck erhält das Proportionalventil 4 über die Druckzuführung 8, die, wie die für den Rückhub benötigte Druckzuführung 9 und die in einer Steckbuchse 14 zusammengeführten elektrischen Zuführungen am Gehäuse 7 vorzugsweise an geschützter Stelle angebracht ist.

Das Proportionalventil 4 setzt ein von einer nicht dargestellten elektrischen Steuereinrichtung eingeprägtes elektrisches Steuersignal in einen entsprechenden Ausgangsdruck für den Arbeitszylinder 3 um, der jedoch den Eingangsdruck nicht übersteigen kann, so daß der Druckverlauf unterhalb des Eingangsdruckes während eines Schweißvorganges durch Vorgabe des Steuersignalverlaufs eingestellt werden kann. Durch die bevorzugte Verwendung einer speicherprogrammierbaren Steuerung zur Vorgabe des das Proportionalventil 4 ansteuernden Stuersignals können einmal optimierte Schweißvorgänge gespeichert und bei Bedarf abgerufen werden.

Ein Schweißvorgang läuft z. B. wie folgt ab: Das Proportionalventil 4 der Vorschubeinheit erhält, neben einem konstanten Eingangsdruck über die Druckzuführung 8, ein definiertes Steuersignal zugeführt und erzeugt ausgangsseitig einen diesem Steuersignal entsprechenden Druck auf der Schubseite des Arbeitszylinders 3. Der Kolben 3' des Arbeitszylinders 3 übt nun eine Kraft auf den Schlitten 2 der Vorschubeinheit aus, unter der dieser sich in Richtung eines Werkstückes (nicht gezeigt) bewegt, bis die Sonotrode 12 auf dem zu schweißenden Werkstück, z. B. auf einem vorbereiteten Nietdom, aufsitzt. Nun schaltet der Ultraschallgenerator (nicht gezeigt) ein, während der Schweißdruck gemäß eines von der Steuerung vorgegebenen Druck-Zeit-Profils gesteuert wird. Infolge der Ultraschalleinwirkung über die Sonotrode 12 wird der Nietdom anplastifiziert und unter der Wirkung des Schweißdruckes bis zu einer vorgewählten Tiefe herunterverformt. Hierbei kann die erreichte Tiefe von einem Wegmesser 6 gemessen oder, weniger genau; unter Verwendung von Erfahrungswerten durch Zeitablauf ermittelt werde. Nach dem Erreichen der Solltiefe wird der Ultraschallgenerator abgeschaltet und der Schweißdruck auf einen maximalen Wert erhöht. Dadurch wird der Nietdom noch einen kurzen Weg mit hohem Druck nachgedrückt, was eine Verfestigung des Nietkopfes bewirkt. Nach einer vorgegebenen Auskühlzeit schaltet das Proportionalventil 4 auf Entlüften und über ein externes Rückhubventil und die Druckzuführung 9 wird Druck auf die Rückhubseite des Arbeitszylinders 3 gegeben und die Vorschubeinheit damit in Grundstellung zurückgefahren.

Die Figur 1 b zeigt die bereits in Figur 1a dargestellte Vorschubeinheit in einer Seitenansicht aus der in Figur 1a mit X bezeichneten Richtung. Hier sind die Anordnung des Arbeitszylinders 3 und die Anordnung des Weggebers 6, der in der Art eines Flachbahnreglers mit einer aufgedampften Widerstandsschicht ausgestaltet sein kann, gut zu erkennen.

Die Figur 2a gibt eine Draufsicht auf die Vorschubeinheit in der in Figur 1a mit Y bezeichneten Richtung wieder. Die durchbrochene Kreislinie zeigt die Position des von außen nicht sichtbaren Arbeitszylinders 3 an. Außerdem sind die Anordnungen des Wegmeßgebers 6 und der Druckzuführung 8 zu sehen.

Ein in Figur 2b wiedergegebenes Schnittbild entlang der in Fig. 1 eingezeichneten Linie A-A zeigt die Lage des Proportionalventils 4 innerhalb des Gehäuses 7. Neben dem Wegmeßgeber 6 ist ein Drucksensor 5 zu erkennen, der mit der Druckausgangsseite des Proportionalventils 4 und einer von diesem zum Arbeitszylinder 3 führenden Druckleitung 11 in Verbindung steht. Eine Eingangsdruckleitung 10 führt - im Schnittbild nicht erkennbar - zur Druckzuführung 8. Von der Druckausgangsseite des Proportionalventils 4 führt eine Bohrung zu einem Service-Anschluß 12, der zu Mess- und Prüfzwecken benutzt wird. Ein in der Achse des Proportionalventils 4 angeordneter Schalldämpfer 12 schwächt die bei pneumatischen Schaltvorgängen entstehenden Geräusche ab und braucht bei Verwendung eines hydraulisch betätigten Arbeitszylinders nicht vorgesehen zu werden.

Bei der obigen Beschreibung des Ausführungsbeispiels wird davon ausgegangen, daß es sich bei der Schweißvorrichtung um eine Ultraschali-Schweißvorrichtung handelt. Es ist aber auch möglich, die beschriebene Vorschubeinheit auch bei anderen Schweißvorrichtungen, bei denen ein Vorschub des Schweißwerkzeugs zum Werkstück hin erforderlich ist, einzusetzen. Als Beispiel hierfür soll ein Heizstempel oder ein Schweißwerkzeug einer Heißluftschweißvorrichtung angeführt werden.

## Patentansprüche

1. Vorschubeinheit für eine Schweißvorrichtung, insbesondere eine Ultraschall-Schweißvorrichtung, mit einem entlang einer Linearführung (1) beweglichen, ein Schweißwerkzeug (10) der Schweißvorrichtung tragenden Schlitten (2), und mit mindestens einem mit dem Schlitten verbundenen, hydraulisch oder pneumatisch betätigten, über gesteuerte Ventile mit Druck beaufschlagbaren Arbeitszylinder (3), **dadurch gekennzeichnet, daß** zur Einstellung des die Bewegung des Arbeitszylinders (3) bewirkenden Druckes ein in der Nähe des Arbeitszylinders (3) angeordnetes Proportionalventil (4) vorgesehen ist, dessen Ausgang über eine kurze Druckleitung (11) mit dem Eingang des Arbeitszylinders (3) verbunden ist, daß das Proportionalventil (4) in einem den Arbeitszylinder (3) umschließenden Gehäuse (7) angeordnet ist, und daß das Gehäuse (7) Druckzuführungen (8, 9) aufweist, durch welche der Vorschubeinheit ein einen Kolben (3') des Arbeitszylinders (3) in Schubrichtung oder in Rückhubrichtung druckbeaufschlagendes Druckübertragungsmedium zuführbar ist.

2. Vorschubeinheit nach Anspruch 1, **dadurch gekennzeichnet, daß** die Vorschubeinheit ein den Ausgangsdruck des Proportionalventils (4) erfassenden Drucksensor aufweist.

3. Vorschubeinheit nach einem der vorangehenden Ansprüche, **dadurch gekennzeichnet, daß** die Vorschubeinheit einen die Position des die Ultraschall-Schweißvorrichtung tragenden Schlittens (2) erfassenden Weggeber (6) aufweist

4. Vorschubeinheit nach einem der vorangehenden Ansprüche, **dadurch gekennzeichnet, daß** die elektrischen Zuleitungen zum Proportionalventil (4), zum Drucksensor (5) und/oder zum Weggeber (6) über eine gemeinsame Verbindung (14) mit einer von der Vorschubeinheit abgesetzt angeordneten elektrischen Steuerung verbunden sind.

5. Vorschubeinheit nach Anspruch 1, **dadurch gekennzeichnet, daß** die Druckzuführungen (8, 9) als Steckverbindungen ausgeführt sind.

6. Vorschubeinheit nach einem der vorstehenden Ansprüche, **dadurch gekennzeichnet, daß** der Arbeitszylinder (3) ein doppeltwirkender Arbeitszylinder ist, dessen Kolben (3') in Vorschubrichtung vom Ausgangsdruck des Ventils (4) und in Rückhubrichtung durch einen über ein Rückhubventil zugeführten Arbeitsdruck beaufschlagbar ist.

7. Vorschubeinheit nach einem der vorangehenden Ansprüche, **dadurch gekennzeichnet, daß** die Vorschubeinheit mit einer Steuerung verbindbar ist, durch die Steuersignale durch das Proportionalventil (4) und/oder das Rückhubventil erzeugbar sind.

## Claims

1. Feeding unit for an ultrasonic welding device, having a carriage (2) bearing a welding tool (10) of the ultrasonic welding device, the carriage (2) being movable along linear guide means, the unit having at least one working cylinder (3) being connected with the carriage (2), which can be actuated hydraulically or pneumatically and impacted with pressure via controlled valves, **characterized in that** for setting the pressure effecting the movement of the working cylinder (3) a proportional valve (4) is provided near the working cylinder (3), the output of which is connected via a short pressure line (11) with the input of the working cylinder (3), that the proportional valve (4) is provided in a housing (7) surrounding the working cylinder (3), and that the housing (7) has pressure plugs (8, 9), by which a pressure transmission medium can be led into the feeding unit for impacting a piston (3') of the working cylinder (3) in forward or backward direction.

2. Feeding unit according to claim 1, **characterized in that** said feeding unit comprises a pressure sensor for measuring the output pressure of the proportional valve (4).

3. Feeding unit according to one of the preceding claims, **characterized in that** said the feeding unit has a position sensor (6) for measuring the position of the carriage (2) bearing the ultrasonic welding unit.

4. Feeding unit according to one of the preceding claims, **characterized in that** electrical lines for the proportional valve (4), for the pressure sensor (5) and/or for the position sensor (6) are connected via a common connection (14) with a electrical control unit being separated from the feeding unit.

5. Feeding unit according to claim 1, **characterized in that** said pressure plugs (8, 9) are plug-in connections.

6. Feeding unit according to one of the preceding claims, **characterized in that** said working cylinder (3) is a two-way working cylinder, the piston (3') of which can be impacted in forward direction via the output pressure of the valve (4) and in backward direction via a working pressure being provided by a back stroke valve.

7. Feeding unit according to one of the preceding claims, **characterized in that** said feeding unit can be connected with control means, by which control signals for the portional valve (4) and/or for the back stroke valve can be generated.

## Revendications

1. Unité d'avance pour un dispositif de soudage, en particulier pour un dispositif de soudage par ultrasons, comprenant un chariot (2) apte à se déplacer le long d'un guidage linéaire (1) et portant un outil de soudage (10) du dispositif de soudage et comprenant au moins un cylindre de travail (3) relié au chariot, actionné par voie hydraulique ou par voie pneumatique et sur lequel peut s'exercer une pression via des valves commandées, **caractérisée en ce qu'**on prévoit, pour le réglage de la pression déclenchant le mouvement du cylindre de travail (3), une valve proportionnelle (4) disposée à proximité du cylindre de travail (3), dont la sortie est reliée, via un conduit (11) de courte distance destiné à la pression, à l'entrée du cylindre de travail (3), **en ce que** la valve proportionnelle (4) est disposée dans un logement (7) renfermant le cylindre de travail (3), et **en ce que** le logement (7) présente des amenées de pression (8, 9) par lesquelles un milieu de transmission de pression agissant sur un piston (3') du cylindre de travail (3) dans la direction de poussée ou dans la direction de la course de retour peut être acheminé à l'unité d'avance.

2. Unité d'avance selon la revendication 1, **caractérisée en ce que** l'unité d'avance présente un capteur de pression enregistrant la pression de sortie de la valve proportionnelle (4).

3. Unité d'avance selon l'une quelconque des revendications précédentes, **caractérisée en ce que** l'unité d'avance présente un capteur de déplacement enregistrant la position du chariot (2) portant le dispositif de soudage par ultrasons.

4. Unité d'avance selon l'une quelconque des revendications précédentes, **caractérisée en ce que** les conduits électriques menant à la valve proportionnelle (4), au capteur de pression (5) et/ou au capteur de déplacement (6) sont reliés via une liaison commune (14) à une commande électrique disposée en retrait par rapport à l'unité d'avance.

5. Unité d'avance selon la revendication 1, **caractérisée en ce que** les amenées de pression (8, 9) sont réalisées sous la forme d'un raccord mâle et femelle.

6. Unité d'avance selon l'une quelconque des revendications précédentes, **caractérisée en ce que** le cylindre de travail (3) est un cylindre de travail à double action dont le piston (3') peut être sollicité, dans la direction d'avance, par la pression de sortie de la valve (4), et dans la direction de la course de retour, par une pression de travail acheminée via une valve de course de retour.

7. Unité d'avance selon l'une quelconque des revendications précédentes, **caractérisée en ce que** l'unité d'avance peut être reliée à une commande par laquelle des signaux de commande peuvent être générés à travers la valve proportionnelle (4) et/ou la valve de course de retour.
